# EUROPEAN PATENT SPECIFICATION

(11) **EP 4 286 091 B1**
(45) Date of publication and mention of the grant of the patent: **27.05.2026**
(21) Application number: 23165674.5
(22) Date of filing: 30.03.2023
(51) Int. Cl.: B23Q 1/54, B23Q 1/76

(54) **LEVELING DEVICE FOR FIXING A WORKPIECE WHICH IS PROVIDED WITH AT LEAST TWO FLAT FIXING SURFACES, WHICH ARE OBLIQUE TO EACH OTHER, TO A PLATFORM**
NIVELLIERVORRICHTUNG ZUR BEFESTIGUNG EINES MIT MINDESTENS ZWEI ZUEINANDER SCHRÄGEN BEFESTIGUNGSFLÄCHEN VERSEHENEN WERKSTÜCKS AN EINER PLATTFORM
DISPOSITIF DE NIVELLEMENT POUR FIXER UNE PIÈCE POURVUE D'AU MOINS DEUX SURFACES DE FIXATION PLANES OBLIQUES L'UNE À L'AUTRE SUR UNE PLATEFORME

(30) Priority: 01.06.2022 IT 202200011594
(43) Date of publication of application: 06.12.2023
(73) Proprietor: Officina Meccanica Lombarda S.r.l., 10040 Caprie TO (IT)
(72) Inventor: ROLANDI, Andrea, 27040 MONTALTO PAVESE PV (IT)
(74) Representative: Modiano, Micaela Nadia

(56) References cited:
- DE-A1- 2 449 364
- GB-A- 563 373

## Description

The present invention relates to a leveling device for fixing a workpiece which is provided with at least two flat fixing surfaces, which are oblique to each other, to a platform.

As is known, workpieces intended to be machined on machine tools can be fixed on a platform - which in turn is installed in the work area of the machine tool - using a series of locking devices.

In particular, each one of the locking devices can comprise a hollow cylindrical support which is fixed at right angles to the platform and is provided with retention means for receiving and axially retaining a pin which is screwed at right angles onto a flat fixing surface of the workpiece. The retention means generally comprise elements that can slide radially in the hollow cylindrical support between an open position, in which they free up the cavity of the hollow cylindrical support, allowing the insertion and the extraction of the pin, and a closed position, in which they engage a circumferential groove of the pin that has been inserted in the hollow cylindrical support, so as to axially retain it.

As is known, some workpieces can have two or more fixing surfaces which are oblique to each other. As a consequence, if one of the fixing surfaces is fixed parallel to the platform using a locking device of the type mentioned above, the fixing surfaces that are not parallel to the platform will be oblique with respect to it.

In these cases, it is therefore necessary to interpose a leveling device between the workpiece and the platform in order to compensate for the angular misalignment between the fixing surface of the workpiece and the platform.

A conventional leveling device compensates for such misalignment using a ball coupling between two bodies which are fixed respectively to the platform and to the workpiece.

However, conventional leveling devices of the type described above have the drawback of having limited stability, and furthermore they are subject to play and require frequent maintenance. A leveling device, on which the preamble of appended claim 1 is based, is known from GB 563 373 A.

Therefore, the aim of the present invention is to provide a leveling device for fixing a workpiece which is provided with at least two fixing surfaces, which are oblique to each other, to a platform, which makes it possible to fix the workpiece in a more stable manner and without play compared to conventional leveling devices such as those mentioned above.

Within this aim, an object of the invention is to provide a leveling device that is easily compatible with the locking devices on the market.

The above aim and object and others, which will become clearer from the description that follows, are achieved by a leveling device having the characteristics recited in the appended claim 1, while the appended dependent claims define further advantageous characteristics of the invention.

Now the invention will be described in greater detail, with reference to a preferred but not exclusive embodiment thereof, which is illustrated for the purposes of non-limiting example in the accompanying drawings, wherein:
- Figure 1 is a plan view of a generic workpiece mounted on a platform using a series of conventional fixing devices and a leveling device according to the invention;
- Figure 2 is a cross-sectional view of Figure 1 taken along the line II-II;
- Figure 3 is a plan view of a leveling device according to the invention in a first operating configuration;
- Figure 4 is a side view of the leveling device of Figure 3;
- Figure 5 is a cross-sectional view of Figure 3 taken along the line V-V;
- Figure 6 is a plan view of a leveling device according to the invention in a second operating configuration;
- Figure 7 is a side view of the leveling device of Figure 6;
- Figure 8 is a cross-sectional view of Figure 3 taken along the line VIII-VIII.

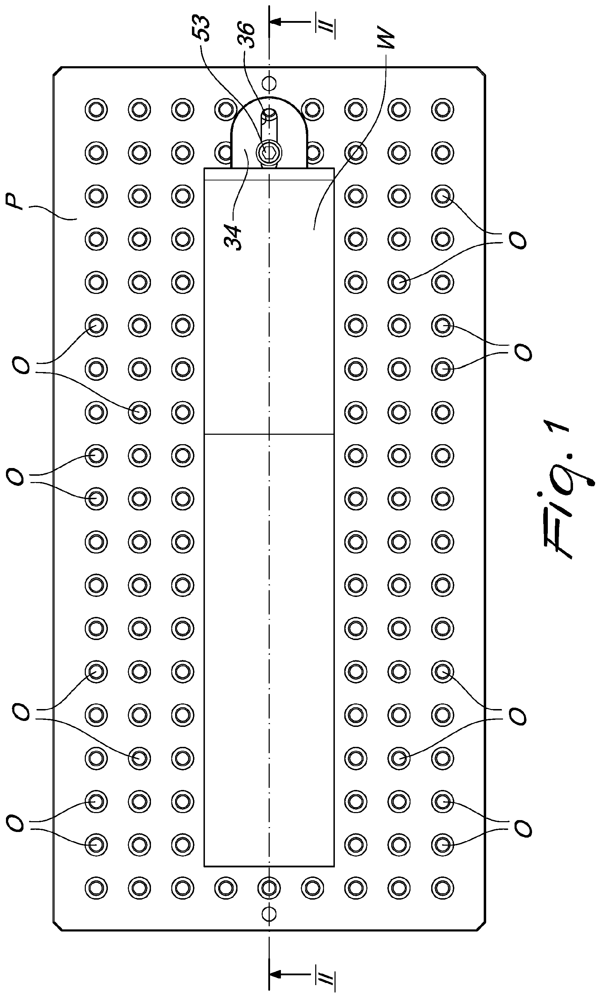

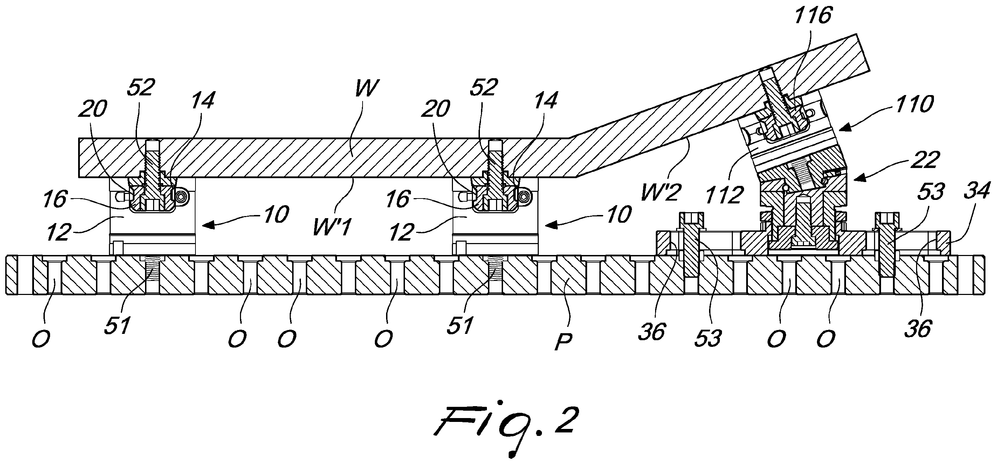

With initial reference to Figures 1 and 2, a generic workpiece W can be positioned and locked into place on a platform P installed in the work area of the machine tool (not shown).

The workpiece W has a first flat fixing surface W'1 and a second flat fixing surface W'2 which extends obliquely with respect to the first. In the example shown, the first fixing surface W'1 and the second fixing surface W'2 form a convex angle.

The platform P is conventionally flat and is provided with a grid of threaded holes O.

In a manner that is in and of itself conventional the first fixing surface W'1 is fixed to the platform P using a pair of locking devices 10.

Each one of the locking devices 10 can comprise a support 12 extending about an axis, which is adapted to be fixed at right angles to the platform P using a first screw S1 which is screwed into one of the threaded holes O, in a manner that is in and of itself conventional. The support 12 has an axial cavity 14 for receiving a respective first pin 16 which is fixed at right angles to the first fixing surface W'1 of the workpiece W with a second screw S2. The support 12 is further provided with retention means (not shown in the figures) for axially retaining the first pin 16 by engaging a circumferential groove 20 thereof. Again in a manner that is in and of itself conventional, the retention means can generally comprise elements that can slide radially in the support 12 between an open position, in which they free up the axial cavity 14 thus allowing the insertion and the extraction of the first pin 16, and a closed position in which they engage the circumferential groove 20 of the first pin 16 so as to retain it axially.

The locking device 10 lies outside the scope of the present invention and, as mentioned, can be of a type that is in and of itself conventional, and for this reason its description will not be explored further.

The second fixing surface W'2 is adapted to be fixed to the platform P using a third locking device 110 of a type similar to those described above and, to this end, it has a second pin 116 screwed thereto which is adapted to engage a second support 112.

However, as illustrated in Figure 2, with the first fixing surface W'1 fixed to the platform P using the first two locking devices 10, the second fixing surface W'2 is now oblique with respect to the platform P and, therefore, it cannot be fixed directly to the latter using the third locking device 110.

Therefore, a leveling device 22 is interposed between the third locking device 110 and the platform P and is adapted to compensate for the angular misalignment between the second fixing surface W'2 of the workpiece W and the platform P.

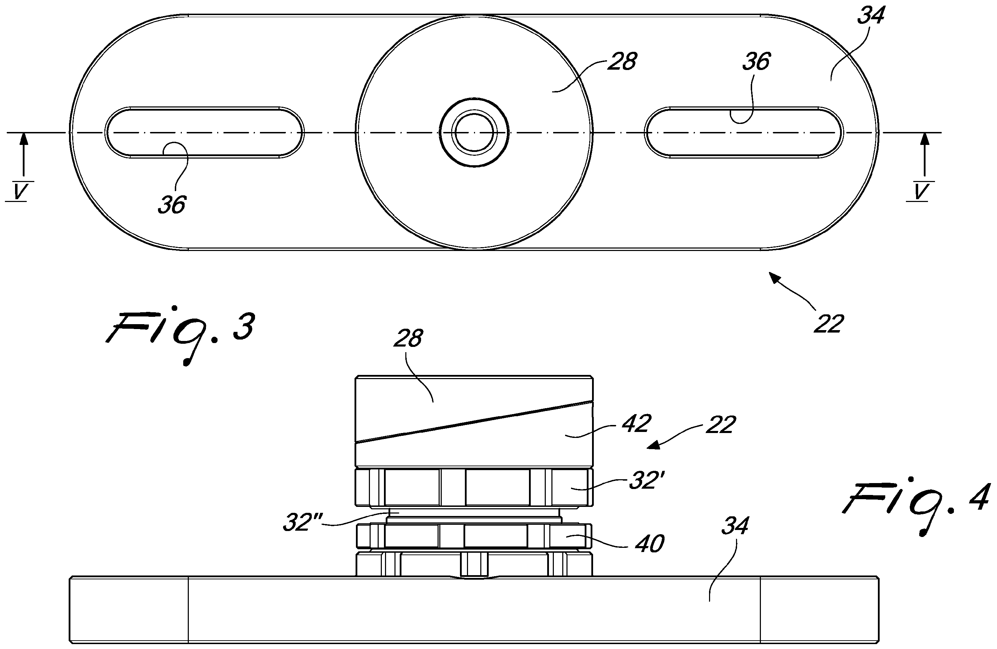

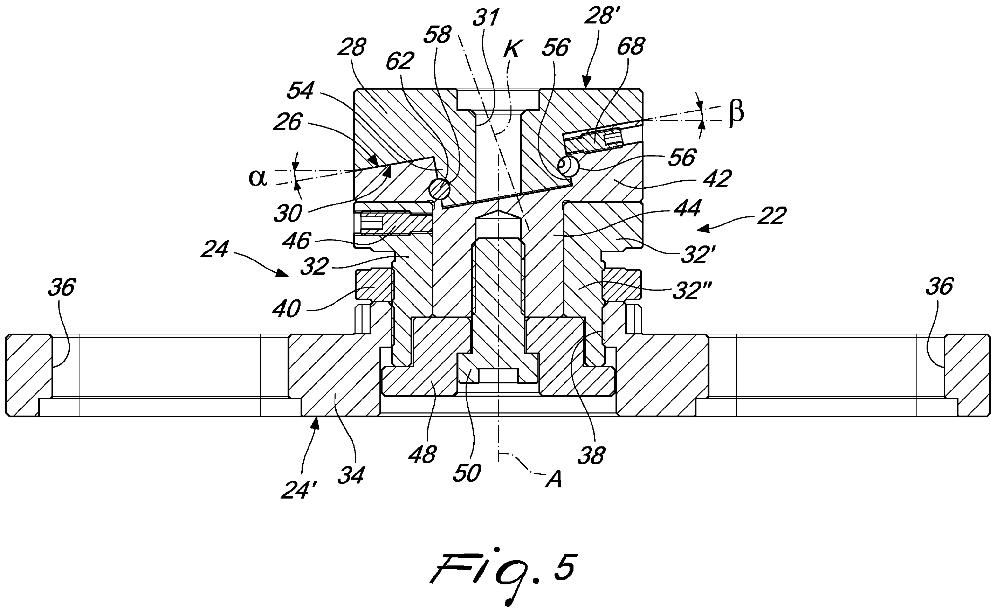

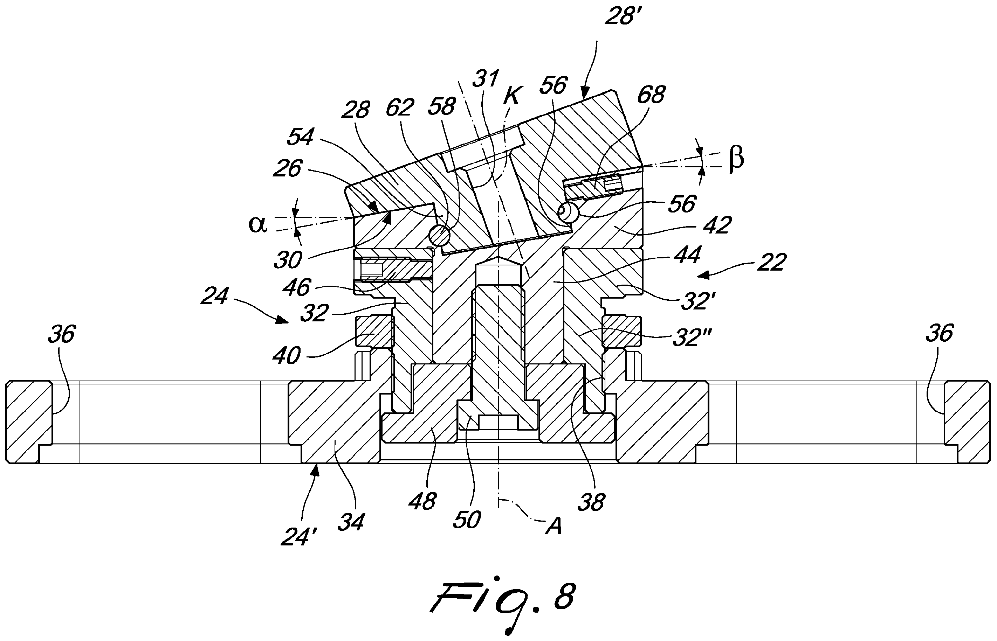

With particular reference now to Figures 3-8, the leveling device 22 according to the invention comprises:
- a base 24 having a first fixing plane 24' adapted to be fixed parallel to the platform P, and a first flat oblique face 26 which is inclined at a first angle α with respect to the first fixing plane 24';
- a flange 28 having a second fixing plane 28' adapted to be fixed, using the third locking device 110, parallel to the second fixing surface W'2 of the workpiece W, and a second oblique face 30 which is inclined at a second angle β with respect to the second fixing plane 28' and is in abutment against the first oblique face 26, the flange 28 being supported so that it can rotate by the base 24 about a first axis K perpendicular to the first oblique face 26 and to the second oblique face 30.

Therefore, by rotating the flange 28 with respect to the base 24 about the first axis K, the inclination of the second fixing plane 28', which is adapted to be fixed parallel to the second fixing surface W'2 of the workpiece W, varies with respect to the first fixing plane 24', which is adapted to be fixed parallel to the platform P, at an angle comprised between α - β and α + β.

Preferably, either or both of the first angle α and the second angle β are comprised between 5° and 30°.

Advantageously, the first angle α and the second angle β are identical.

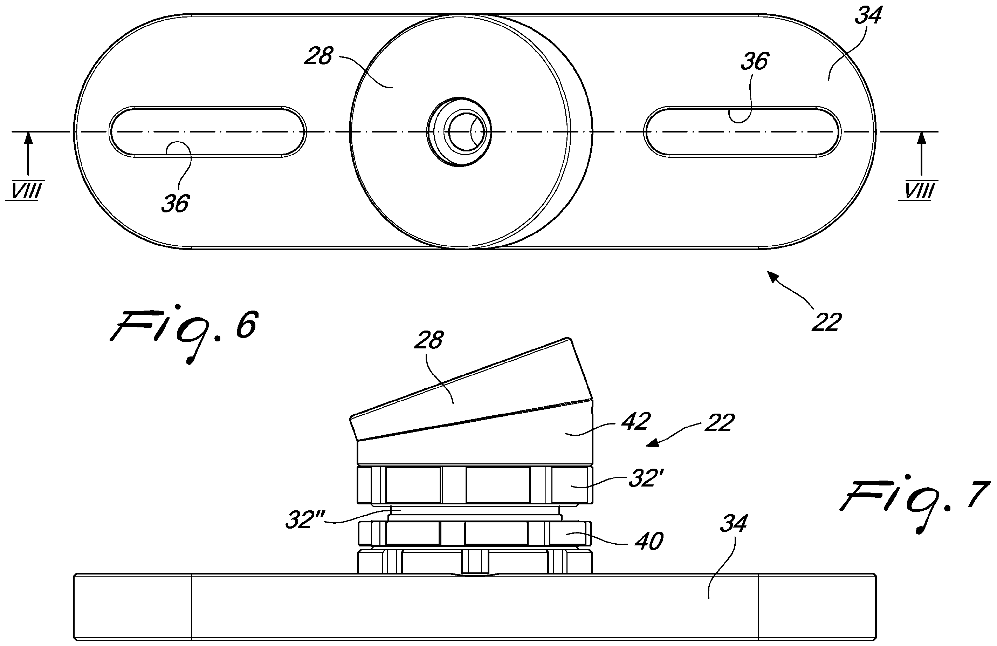

In the example described and illustrated herein, the first angle α and the second angle β are equal to 10°, so that the inclination of the second fixing plane 28' with respect to the first fixing plane 24' can be adjusted between 0° (as illustrated in Figures 3-5) and 20° (as illustrated in Figures 6-8).

For the threaded connection to the support 112 of the third fixing device 110, the flange 28 has a threaded hole 31 which extends at right angles from the second fixing plane 28'. Obviously, depending on the type of fixing device used, the threaded hole 31 can be substituted by different connection means, e.g., male threaded elements and the like.

The base 24 comprises a bushing 32 which extends about a second axis A. The bushing 32 is fixed in an adjustable axial position and at right angles to a base plate 34 on which the first fixing plane 24' is defined. The base plate 34, in this embodiment, has an elongated shape and is provided with two slots 36 which are elongated in a longitudinal direction for fixing to the platform P using respective third screws S3 inserted in the threaded holes O (Figures 1 and 2). The slots 36 make it possible to longitudinally adjust the position of the base plate 34 parallel to the platform P.

For adjusting the axial position of the bushing 32 with respect to the base plate 34, the bushing 32 has a head portion 32' and a threaded portion 32" which engages a correspondingly threaded opening 38 in the base plate 34. The bushing 32 can be locked in the desired axial position with respect to the base plate 34 using a ring nut 40 which is screwed onto the threaded portion 32" and is adapted to be tightened against the base plate 34 once the bushing 32 is positioned at the desired height.

In order to facilitate the installation and adjustment of the leveling device 22, the first oblique face 26 is provided on a counter-flange 42 which is supported so that it can rotate by the bushing 32 about the axis thereof, i.e., the second axis A, so as to allow the adjustment of the angular position of the counter-flange 42 with respect to the bushing 32.

In more detail, the counter-flange 42 is in axial abutment against the head portion 32' of the bushing 32 and has a tubular projection 44 which is inserted into the bushing 32 so that it can rotate. The angular position of the counter-flange 42 with respect to the bushing 32 can be locked by tightening a first threaded grub screw 46 which is screwed radially into the head portion 32', so that its internal end engages with the tubular projection 44 of the counter-flange 42.

The counter-flange 42 is locked axially with respect to the bushing 32 by way of a plug 48 which is inserted at the opposite end of the bushing 32 with respect to the counter-flange 42 and is fixed coaxially to the tubular projection 44 using a fourth screw 50.

The flange 28 is provided with a cylindrical projection 54 which protrudes at right angles from the second oblique face 30 and is inserted so that it can rotate into a corresponding cylindrical cavity 56 which extends at right angles from the first oblique face 26. The cylindrical projection 54 and the cylindrical cavity 56 have respective mutually opposite circumferential grooves 58, 60, between which a ring of balls 62 is accommodated. The balls 62 can be inserted and removed through a radial hole (not visible in the figures) provided on the counter-flange 42.

The angular position of the flange 28 with respect to the counter-flange 42 can be locked by tightening a third threaded grub screw 68 which is screwed radially into the counter-flange 42 in a position that does not interfere with the ring of balls 62, so that its internal end engages with the cylindrical projection 54.

The operation of the device is illustrated in Figures 1 and 2, with reference to fixing the generic workpiece W on the platform P.

By rotating the flange 28 with respect to the counter-flange 42 and rotating the latter with respect to the bushing 32, the second fixing plane 28' of the leveling device 22 is orientated so as to lie parallel to the second fixing surface W'2 of the workpiece W.

In this manner, the support 112 of the third locking device 110 can be screwed on the first fixing plane 24' and engaged by the second pin 116 which is screwed on the second fixing surface W'2.

In particular, the support 112 and the second pin 116 can be aligned both by rotating the bushing 32 so as to adjust the vertical position of the leveling device 22, and by shifting the base plate 34 in a longitudinal direction parallel to the platform P, by virtue of the freedom of positioning offered by the elongated slots 36.

It is preferable to lock the various movable parts of the leveling device 22 in place only after the workpiece W has been correctly positioned on the locking devices 10, 110, with the pins 16, 116 inserted into the respective supports 12, 112. In particular, until the workpiece W is correctly positioned on the locking devices 10, 110, it may be necessary to leave at least the base plate 34 free to slide with respect to the platform P, in order to prevent interference between the pins 16, 116 and the respective supports 12, 112 during the step of inserting the former into the latter.

It has also been found in practice that the leveling device according to the invention fully achieves the set aims, by making it possible to fix the oblique fixing surfaces of the workpiece to the platform stably and without play. This is mainly due to the fact that the joint that makes it possible to orientate the leveling device 110 with respect to the workpiece W is provided between two ample surfaces that are in abutment against each other, i.e., the first oblique face 26 and the second oblique face 30, instead of, e.g., using ball joints as in some conventional devices.

Furthermore, again according to the set aims, in the example described it has been shown that the leveling device according to the invention is easily compatible with the locking devices conventionally on the market.

An embodiment of the invention has been described, but obviously the person skilled in the art may make various modifications and variations within the scope of protection of the claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A leveling device for fixing a workpiece (W) which is provided with at least two fixing surfaces (W'1, W'2), which are oblique to each other, to a platform (P) via a locking device (110), comprising:
- a base (24) having a first fixing plane (24') adapted to be fixed parallel to the platform (P), and a first flat oblique face (26) which is inclined at a first angle (α) with respect to said first fixing plane (24');
- a flange (28) having a second fixing plane (28') adapted to be fixed parallel to one (W'2) of said two fixing surfaces using said locking device (110), and a second flat oblique face (30) which is inclined at a second angle (β) with respect to said second fixing plane (28') and is in abutment against the first flat oblique face (26), said flange (28) being supported so that it can rotate by the base (24) about an axis (K) perpendicular to said first flat oblique face (26) and said second flat oblique face (30),
**characterized in that** said base (24) comprises a bushing (32) which is fixed in an adjustable axial position and at right angles to a base plate (34) on which said first fixing plane (24') is defined, said first flat oblique face (26) being provided on a counter-flange (42) which is supported so that it can rotate by said bushing (32) about the axis thereof.

2. The leveling device according to claim 1, **characterized in that** said bushing (32) has a head portion (32') and a threaded portion (32") which engages a correspondingly threaded opening (38) of said base plate (34) for the adjustment of the axial position of the bushing (32) with respect to the base plate (34).

3. The leveling device according to claim 2, **characterized in that** the axial position of said bushing (32) with respect to said base plate (34) can be locked using a ring nut (40) which is screwed onto said threaded portion (32") and is adapted to be tightened against said base plate (34).

4. The leveling device according to one or more of claims 1-3, **characterized in that** said base plate (34) is provided with elongated slots (36) in order to be screwed to said platform (P) in an adjustable position.

5. The leveling device according to claim 1, **characterized in that** said counter-flange (42) is in axial abutment against said bushing (32) and has a tubular projection (44) which is inserted into said bushing (32) so that it can rotate.

6. The leveling device according to one or more of claims 1-5, **characterized in that** said flange (28) is provided with a cylindrical projection (54) which protrudes at right angles from the second flat oblique face (30) and is inserted so that it can rotate into a corresponding cylindrical cavity (56) which extends at right angles from said first flat oblique face (26).

7. The leveling device according to claim 6, **characterized in that** it comprises a ring of balls (62) which are interposed between said cylindrical projection (54) and said cylindrical cavity (56).

8. The leveling device according to one or more of claims 1-7, **characterized in that** said first angle (α) and said second angle (β) are equal.

## Patentansprüche

1. Eine Nivelliervorrichtung zur Befestigung eines mit mindestens zwei zueinander schrägen Befestigungsflächen (W'1, W'2) versehenen Werkstücks (W) an einer Plattform (P) mit Hilfe einer Verriegelungsvorrichtung (110); Folgendes umfassend:
- eine Basis (24) mit einer ersten Befestigungsebene (24'), ausgebildet, um parallel zur Plattform (P) befestigt zu werden, und einer ersten flachen, schrägen Fläche (26), die im Verhältnis zu der ersten Befestigungsebene (24') in einem ersten Winkel (α) geneigt ist;
- einen Flansch (28) mit einer zweiten Befestigungsebene (28'), ausgebildet, um mit Hilfe der Verriegelungsvorrichtung (110) parallel zu einer (W'2) der zwei Befestigungsflächen befestigt zu werden, und einer zweiten flachen, schrägen Fläche (30), die im Verhältnis zu der zweiten Befestigungsebene (28') in einem zweiten Winkel (β) geneigt ist und an der ersten flachen, schrägen Fläche (26) anliegt; wobei der Flansch (28) auf der Basis (24) so gelagert ist, dass er sich um eine Achse (K) drehen kann, die senkrecht zu der ersten flachen, schrägen Fläche (26) und der zweiten flachen, schrägen Fläche (30) ist;
**dadurch gekennzeichnet, dass** die Basis (24) eine Buchse (32) umfasst, die in einer verstellbaren axialen Position und in rechten Winkeln zu einer Grundplatte (34) befestigt ist, auf welcher die erste Befestigungsebene (24') bestimmt ist; wobei die erste flache, schräge Fläche (26) an einem Gegenflansch (42) angebracht ist, welcher auf der Buchse (32) so gelagert ist, dass er sich um die Achse davon drehen kann.

2. Die Nivelliervorrichtung gemäß Anspruch 1, **dadurch gekennzeichnet, dass** die Buchse (32) einen Kopfabschnitt (32') und einen Gewindeabschnitt (32") hat, der in eine entsprechende Gewindeöffnung (38) der Grundplatte (34) eingreift, zur Anpassung der axialen Position der Buchse (32) mit Bezug auf die Grundplatte (34).

3. Die Nivelliervorrichtung gemäß Anspruch 2, **dadurch gekennzeichnet, dass** die axiale Position der Buchse (32) im Verhältnis zu der Grundplatte (34) mit Hilfe einer Ringmutter (40) verriegelt werden kann, die auf den Gewindeabschnitt (32") aufgeschraubt wird und ausgebildet ist, um gegen die Grundplatte (34) festgezogen zu werden.

4. Die Nivelliervorrichtung gemäß einem oder mehreren der Ansprüche 1-3, **dadurch gekennzeichnet, dass** die Grundplatte (34) mit Längsschlitzen (36) versehen ist, um in einer einstellbaren Position mit der Plattform (P) verschraubt zu werden.

5. Die Nivelliervorrichtung gemäß Anspruch 1, **dadurch gekennzeichnet, dass** der Gegenflansch (42) axial an der Buchse (32) anliegt und einen rohrförmigen Vorsprung (44) hat, der so in die Buchse (32) eingeführt wird, dass er sich drehen kann.

6. Die Nivelliervorrichtung gemäß einem oder mehreren der Ansprüche 1-5, **dadurch gekennzeichnet, dass** der Flansch (28) mit einem zylindrischen Vorsprung (54) versehen ist, der in rechten Winkeln von der zweiten flachen, schrägen Fläche (30) vorsteht und drehbar in einen entsprechenden zylindrischen Hohlraum (56) eingeführt wird, der sich in rechten Winkeln von der ersten flachen, schrägen Fläche (26) erstreckt.

7. Die Nivelliervorrichtung gemäß Anspruch 6, **dadurch gekennzeichnet, dass** sie einen Ring von Kugeln (62) umfasst, die zwischen dem zylindrischen Vorsprung (54) und dem zylindrischen Hohlraum (56) angeordnet sind.

8. Die Nivelliervorrichtung gemäß einem oder mehreren der Ansprüche 1-7, **dadurch gekennzeichnet, dass** der erste Winkel (α) und der zweite Winkel (β) gleich sind.

## Revendications

1. Dispositif de nivellement pour fixer une pièce à usiner (W) qui est pourvue d'au moins deux surfaces de fixation (W'1, W'2) obliques l'une par rapport à l'autre, à une plateforme (P) via un dispositif de verrouillage (110), comprenant :
- une base (24) comportant un premier plan de fixation (24') adapté pour être fixé parallèlement à la plateforme (P), et une première face plane oblique (26) qui est inclinée selon un premier angle (α) par rapport audit premier plan de fixation (24') ;
- une bride (28) comportant un deuxième plan de fixation (28') adapté pour être fixé parallèlement à l'une (W'2) desdites deux surfaces de fixation à l'aide dudit dispositif de verrouillage (110), et une deuxième face plane oblique (30) qui est inclinée d'un deuxième angle (β) par rapport audit deuxième plan de fixation (28') et qui est en butée contre la première face plane oblique (26), ladite bride (28) étant supportée de manière à pouvoir tourner par la base (24) autour d'un axe (K) perpendiculaire à ladite première face plane oblique (26) et à ladite deuxième face plane oblique (30),
**caractérisé en ce que** ladite base (24) comprend une douille (32) qui est fixée dans une position axiale réglable et perpendiculairement à une plaque de base (34) sur laquelle est défini ledit premier plan de fixation (24'), ladite première face plane oblique (26) étant prévue sur une contre-bride (42) qui est supportée de manière à pouvoir tourner par ladite douille (32) autour de l'axe de celle-ci.

2. Dispositif de nivellement selon la revendication 1, **caractérisé en ce que** ladite douille (32) comporte une partie de tête (32') et une partie filetée (32") qui s'engage dans une ouverture filetée correspondante (38) de ladite plaque de base (34) pour le réglage de la position axiale de la douille (32) par rapport à la plaque de base (34).

3. Dispositif de nivellement selon la revendication 2, **caractérisé en ce que** la position axiale de ladite douille (32) par rapport à ladite plaque de base (34) peut être bloquée à l'aide d'une bague d'écrou (40) qui est vissée sur ladite partie filetée (32") et qui est adaptée pour être serrée contre ladite plaque de base (34).

4. Dispositif de nivellement selon une ou plusieurs des revendications 1 à 3, **caractérisé en ce que** ladite plaque de base (34) est pourvue de fentes allongées (36) afin d'être vissée sur ladite plateforme (P) dans une position réglable.

5. Dispositif de nivellement selon la revendication 1, **caractérisé en ce que** ladite contre-bride (42) est en butée axiale contre ladite douille (32) et comporte une saillie tubulaire (44) qui est insérée dans ladite douille (32) de manière à pouvoir tourner.

6. Dispositif de nivellement selon une ou plusieurs des revendications 1 à 5, **caractérisé en ce que** ladite bride (28) est pourvue d'une saillie cylindrique (54) qui fait saillie à angle droit par rapport à la deuxième face plane oblique (30) et qui est insérée de manière à pouvoir tourner dans une cavité cylindrique correspondante (56) qui s'étend à angle droit par rapport à ladite première face plane oblique (26).

7. Dispositif de nivellement selon la revendication 6, **caractérisé en ce qu'**il comprend une bague de billes (62) qui sont interposées entre ladite saillie cylindrique (54) et ladite cavité cylindrique (56).

8. Dispositif de nivellement selon une ou plusieurs des revendications 1 à 7, **caractérisé en ce que** ledit premier angle (α) et ledit deuxième angle (ß) sont égaux.
